# EUROPEAN PATENT APPLICATION

(11) **EP 4 831 020 A1**
(43) Date of publication of application: **28.10.2026**
(21) Application number: 24907379.2
(22) Date of filing: 16.12.2024
(51) Int. Cl.: B60T 13/74, B60T 17/22

(54) **WORK VEHICLE**

(30) Priority: 21.12.2023 JP 2023215403
(71) Applicant: Iseki & Co., Ltd., Matsuyama-shi, Ehime 799-2655 (JP)
(72) Inventor: MASUDA Ryutaro, Iyo-gun, Ehime 791-2111 (JP)
(74) Representative: TBK
(86) International application number: PCT/JP2024/044464
(87) International publication number: WO 2025/134994

(57) **Abstract**

Provided is a work vehicle capable of removing a malfunctioning electric brake to release braking of a wheel by employing a configuration in which a brake device (52) that brakes a wheel (2) is provided, an electric actuator (80) that operates and releases operation of the brake device (52) is provided, the electric actuator (80) engages with a support frame (84), and when engagement between the electric actuator (80) and the support frame (84) is released, the operation of the brake device (52) by the electric actuator (80) is released.

## Description

### TECHNICAL FIELD

The present invention relates to a work vehicle that mows grass.

### BACKGROUND ART

Conventionally, a vehicle is known which includes a technique of braking a drive wheel by providing a brake operated by an operator himself/herself and an electric brake operated via an electric signal (Patent Document 1).

### PRIOR ART DOCUMENT

### PATENT DOCUMENT

Patent Document 1: JP 2006-256578 A

### SUMMARY OF INVENTION

### TECHNICAL PROBLEM

However, in the means of Patent Document 1, when the electric brake malfunctions due to disconnection of a signal wire, a decrease in a remaining battery level, or the like, braking of the drive wheel cannot be released, and there is a problem that the vehicle cannot be moved.

Therefore, an object of the present invention is to provide a work vehicle capable of releasing braking of a wheel even when the electric brake malfunctions.

### SOLUTION TO PROBLEM

The present invention that has solved the above problem is as follows. That is, the present invention provides a work vehicle characterized in that a brake device (52) that brakes a wheel (2) is provided, an electric actuator (80) that operates and releases operation of the brake device (52) is provided, the electric actuator (80) engages with a support frame (84), and when engagement between the electric actuator (80) and the support frame (84) is released, the operation of the brake device (52) by the electric actuator (80) is released.

### ADVANTAGEOUS EFFECTS OF INVENTION

According to the present invention, even when the electric actuator (80) becomes immovable while operating, the operation of the brake device (52) by the electric actuator (80) can be released.

### BRIEF DESCRIPTION OF DRAWINGS

FIG. 1 is a perspective view of the work vehicle viewed from a front left side.
FIG. 2 is a perspective view of a front part of an electric room viewed from a rear left side.
FIG. 3 is a perspective view of a rear part of the electric room viewed from the rear left side.
FIG. 4 is a plan view of the electric room.
FIG. 5 is a plan view of the electric room in which a battery is mounted.
FIG. 6 is a left side view illustrating a positional relationship between a front wheel and a brake system.
FIG. 7 is a left side view of the brake system.
FIG. 8 is a perspective view of the brake system viewed from a front lower side.
FIG. 9 is a perspective view viewed from the rear left side, illustrating a mounting method of an electric brake.
FIG. 10 is a rear view illustrating the mounting method of the electric brake.
FIG. 11 is a perspective view of the front part of the electric room viewed from the rear left side.

### DESCRIPTION OF EMBODIMENTS

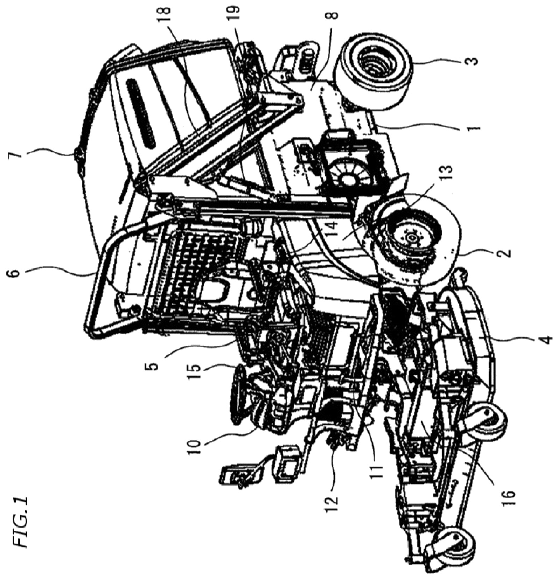

As illustrated in FIG. 1, in the work vehicle, a pair of left and right front wheels (wheels) 2 are provided at a front part of a lower side of a machine body frame 1, and a pair of left and right rear wheels 3 are provided at a rear part of the lower side of the machine body frame 1.

A work device 4 that mows turfgrass growing in a field is provided at a front part of the machine body frame 1, a steering unit 5 on which an operator rides is provided on a rear side of the work device 4, a roll-over protection structure (ROPS) 6 that protects the operator is provided on a rear side of the steering unit 5, a grass collection container 7 that stores the mowed turfgrass is provided on a rear side of the ROPS 6, and an electric room 8 in which an electric motor 30, a battery 33, and the like to be described later for driving the work device 4 are arranged is provided on a lower side of the grass collection container 7.

A steering column 10 that supports a steering wheel is provided on a front side of a driver's seat of the steering unit 5. A monitor that displays an output rotation speed and the like of the electric motor 30 is provided at an upper part of the steering column 10, and a lower part is fixed to a front part of a floor.

A brake pedal (brake operation tool) 11 that brakes rotation of the front wheels 2 is provided on a left side of the steering column 10 on the floor, and an accelerator pedal 12 that increases and decreases a rotation speed of the front wheels 2 is provided on a right side.

An upper side of the front wheels 2 is covered with a fender 13, a brake lever (brake operation tool) 14 that brakes rotation of the front wheels 2 is provided on the fender 13 located on a left side of the driver's seat, and a brake switch 15 that operates an electric actuator 80 to be described later is provided on the fender 13 located on a right side of the driver's seat.

A rear part of the work device 4 and a front part of the grass collection container 7 are communicated with each other by a shooter 16 extending in a front-rear direction, and a blower that exhausts air into the shooter 16 is provided at an intermediate part of the shooter 16 in the front-rear direction.

A pair of left and right link arms 18 are provided at front parts of left and right walls of the grass collection container 7. Front parts of the link arms 18 are swingably fixed to left and right parts of the ROPS 6, and the ROPS 6 and the link arms 18 are connected by an elevating component 19 such as a hydraulic cylinder. Further, a rear part of a lower wall of the grass collection container 7 is mounted on a horizontal frame 21A of a support frame 21 to be described later. Thereby, the grass collection container 7 can be elevated and lowered by driving the elevating component 19.

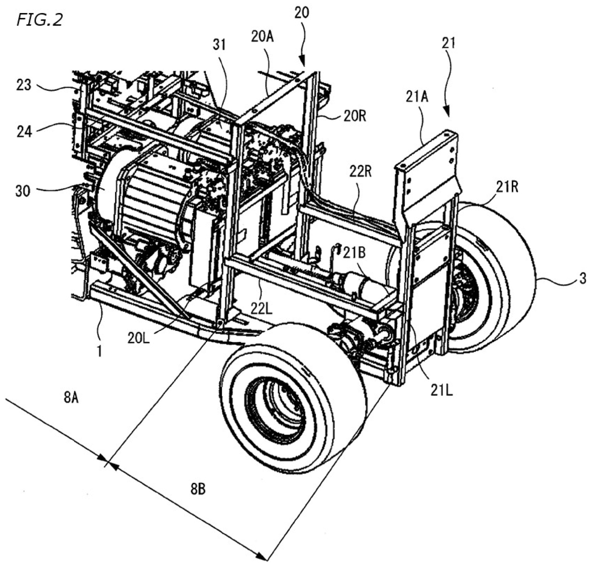

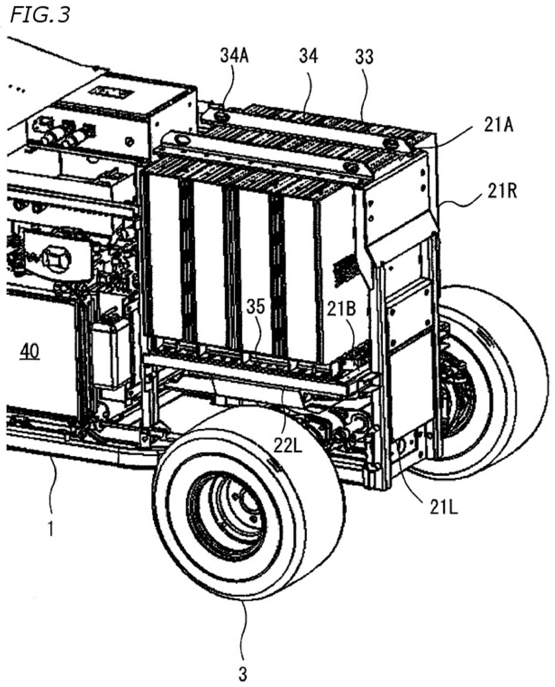

As illustrated in FIGS. 2 and 3, an electric motor 30 for work that drives the work device 4 and an electric motor 31 for traveling that rotates the front wheels 2 are provided in a front electric room 8A of the electric room 8, and a battery 33 that stores electric power to be supplied to the electric motor 30 and the like is provided in a rear electric room 8B.

In a plan view, the electric motor 30 is provided on a left side of a center line of the machine body frame 1 in a left-right direction, and the electric motor 31 is provided on a right side of the center line of the machine body frame 1 in the left-right direction. Thereby, a weight difference between a weight applied to the left side of the center line of the machine body frame 1 in the left-right direction and a weight applied to the right side of the center line of the machine body frame 1 in the left-right direction can be suppressed, and steering performance can be improved.

In a side view, a support frame 20 extending upward from the machine body frame 1 is provided at a partition portion between the front electric room 8A and the rear electric room 8B, and a support frame 21 extending upward from the machine body frame 1 is provided at a rear end portion of the rear electric room 8B.

The support frame 20 is formed of a left vertical frame 20L extending upward from an intermediate part on a left side of the machine body frame 1, a right vertical frame 20R extending upward from an intermediate part on a right side of the machine body frame 1, and a horizontal frame 20A extending in the left-right direction and connecting upper parts of the left vertical frame 20L and the right vertical frame 20R.

The support frame 21 is formed of a left vertical frame 21L extending upward from a rear end portion on the left side of the machine body frame 1, a right vertical frame 21R extending upward from a rear end portion on the right side of the machine body frame 1, a horizontal frame 21A extending in the left-right direction and connecting upper parts of the left vertical frame 21L and the right vertical frame 21R, and a horizontal frame 21B extending in the left-right direction and connecting intermediate parts of the left vertical frame 21L and the right vertical frame 21R. A left part of the horizontal frame 21B extends further to the left side than the left vertical frame 21L, and a right part extends further to the right side than the right vertical frame 21R.

The intermediate part of the left vertical frame 20L and a left end portion of the horizontal frame 21B are connected by a left front-rear frame 22L extending in the front-rear direction, and the intermediate part of the right vertical frame 20R and a right end portion of the horizontal frame 21B are connected by a right front-rear frame 22R extending in the front-rear direction. Thereby, a rear part of the battery 33 can be arranged above a drive shaft of the rear wheels 3, and a large deformation of the machine body frame 1 can be prevented.

An upper part of the left vertical frame 20L and an intermediate part of a left vertical frame 23 provided at a rear part of the steering unit 5 are connected by a left front-rear frame 24 extending in the front-rear direction, and an upper part of the right vertical frame 20R of the support frame 20 and an intermediate part of a right vertical frame 23 provided at the rear part of the steering unit 5 are connected by a right front-rear frame 24 extending in the front-rear direction.

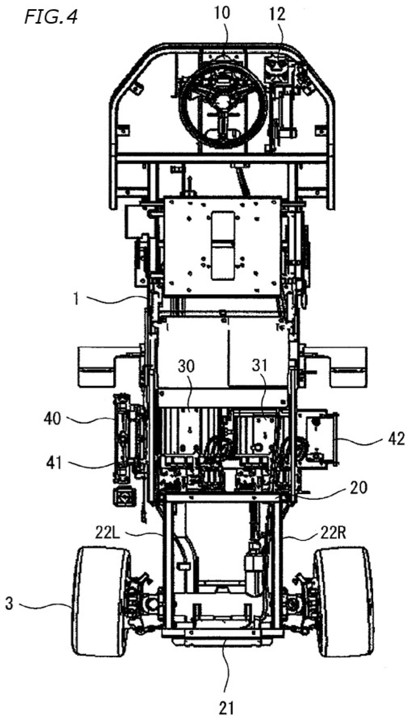

As illustrated in FIG. 4, a longitudinal direction of the electric motor 30 is provided along the front-rear direction. The electric motor 31 is provided adjacent to the right side of the electric motor 30, and a longitudinal direction of the electric motor 31 is provided along the front-rear direction.

A radiator 40 that cools water for cooling the electric motor 30 and the like is provided on an outer side of a left wall of the electric room 8, and a fan 41 that blows outside air toward the electric room 8 is provided between the radiator 40 and the electric motor 30. A circular opening (not illustrated) is formed at a portion facing the fan 41 on the left wall of the electric room 8. Thereby, a temperature rise of the electric motor 30 and the like can be suppressed, and the electric motor 30 and the like can be prevented from malfunctioning.

An auxiliary battery 42 that stores electric power to be supplied to the monitor of the steering unit 5 is provided on an outer side of a portion facing the radiator 40 on a right wall of the electric room 8. Thereby, a weight difference between a left part and a right part of the work vehicle can be suppressed.

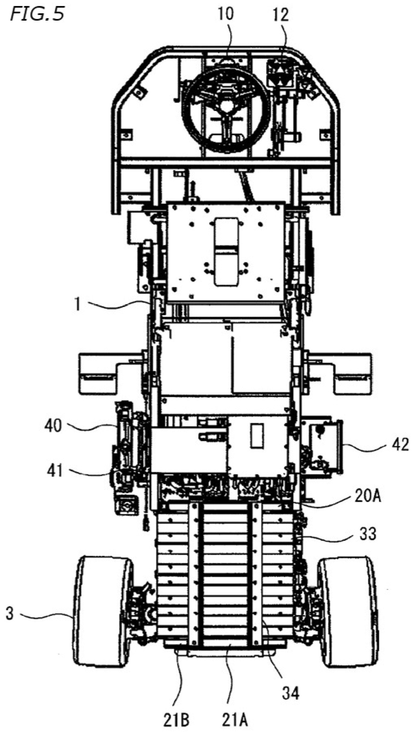

As illustrated in FIGS. 3 and 5, a front part of a mounting frame 34 that fixes an upper part of the battery 33 is detachably fixed to the horizontal frame 20A of the support frame 20 by a fastening member such as a bolt, and a rear part is detachably fixed to the horizontal frame 21A of the support frame 21 by a fastening member such as a bolt.

A left mounting frame 35 that fixes a lower part of the battery 33 is mounted on the left front-rear frame 22L, and a right mounting frame 35 is mounted on the right front-rear frame 22R.

Openings 34A through which suspension hooks are inserted when replacing the battery 33 are formed at the front part and the rear part of the mounting frame 34. Thereby, the battery 33 can be easily attached to and detached from the support frame 20 and the support frame 21, and the battery 33 can be easily replaced.

### <Brake System>

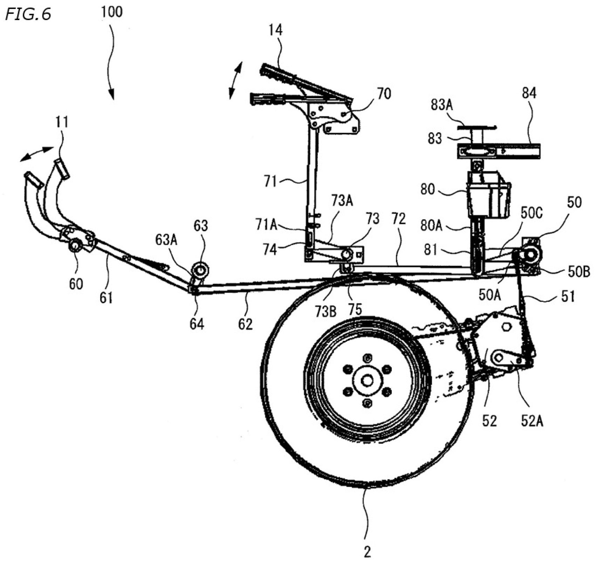

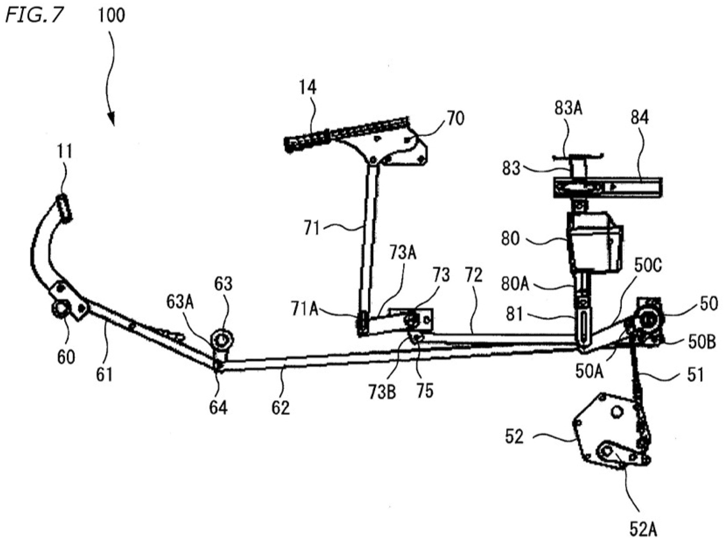

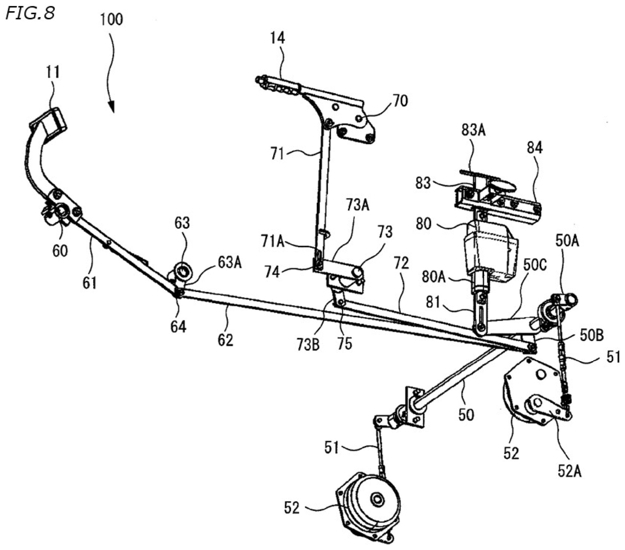

As illustrated in FIGS. 6 to 8, a brake system 100 that brakes rotation of the front wheels 2 is formed of the brake pedal 11, the brake lever 14, the electric actuator 80 operated by the brake switch 15, a rotation shaft 50 extending in the left-right direction and rotated by depression of the brake pedal 11 or the like, and the brake device 52 operated by rotation of the rotation shaft 50.

A distal end portion of an arm 50A provided on a left part of the rotation shaft 50 and a distal end portion of an arm 52A that moves a brake pad provided at a lower part of the brake device 52 are connected via a rod 51 extending in an up-down direction. Thereby, the rotation shaft 50 can be rotated to move the brake pad of the brake device 52, thereby braking the rotation of the front wheels 2.

A base part of the brake pedal 11 is swingably supported by a support shaft 60 extending in the left-right direction. A rear part of the base part of the brake pedal 11 is connected to a distal end portion of an arm 50B provided on the left part of the rotation shaft 50 via a link 61 extending rearward and downward, and a link 62 extending in the front-rear direction.

A rear part of the link 61 and a front part of the link 62 are rotatably fixed to a pin 64 extending in the left-right direction at a distal end portion of an arm 63A provided on a rotation shaft 63 extending in the left-right direction. Thereby, when the brake pedal 11 is depressed, the rotation shaft 50 rotates clockwise in an axial view of the rotation shaft 50 to move the rod 51 upward, and the brake device 52 operates to brake the rotation of the front wheels 2. Furthermore, when depression of the brake pedal 11 is released, the rotation shaft 50 rotates counterclockwise in the axial view of the rotation shaft 50 to move the rod 51 downward, and the operation of the brake device 52 stops.

A base part of the brake lever 14 is swingably supported by a support shaft 70 extending in the left-right direction. A lower part of the base part of the brake lever 14 is connected to the distal end portion of the arm 50B provided on the left part of the rotation shaft 50 via a link 71 extending in the up-down direction and a link 72 extending in the front-rear direction.

An opening 71A having a long axis in the up-down direction is formed at a lower part of the link 71, and a pin 74 extending in the left-right direction of a front part of an arm 73A provided on a left part of a rotation shaft 73 is locked to the opening 71A so as to be movable in the up-down direction.

A front part of the link 72 is rotatably fixed to a pin 75 extending in the left-right direction at a lower part of an arm 73B provided on a right part of the rotation shaft 73. Thereby, when the brake lever 14 is pulled up, the rotation shaft 50 rotates clockwise in the axial view of the rotation shaft 50 to move the rod 51 upward, and the brake device 52 operates to brake the rotation of the front wheels 2. Furthermore, when pull-up of the brake lever 14 is released, the rotation shaft 50 rotates counterclockwise in the axial view of the rotation shaft 50 to move the rod 51 downward, and the operation of the brake device 52 stops.

When the brake switch 15 of the steering unit 5 is pressed, a piston rod 80A of the electric actuator 80 moving in the up-down direction rises, and when the press of the brake switch 15 is released, the piston rod 80A of the electric actuator 80 descends.

A lower part of the piston rod 80A is connected to a distal end portion of an arm 50C provided between the arm 50A and the arm 50B of the rotation shaft 50 via a link 81 extending in the up-down direction. Thereby, when the brake switch 15 is pressed, the rotation shaft 50 rotates clockwise in the axial view of the rotation shaft 50 to move the rod 51 upward, and the brake device 52 operates to brake the rotation of the front wheels 2. Furthermore, when the press of the brake switch 15 is released, the rotation shaft 50 rotates counterclockwise in the axial view of the rotation shaft 50 to move the rod 51 downward, and the operation of the brake device 52 stops.

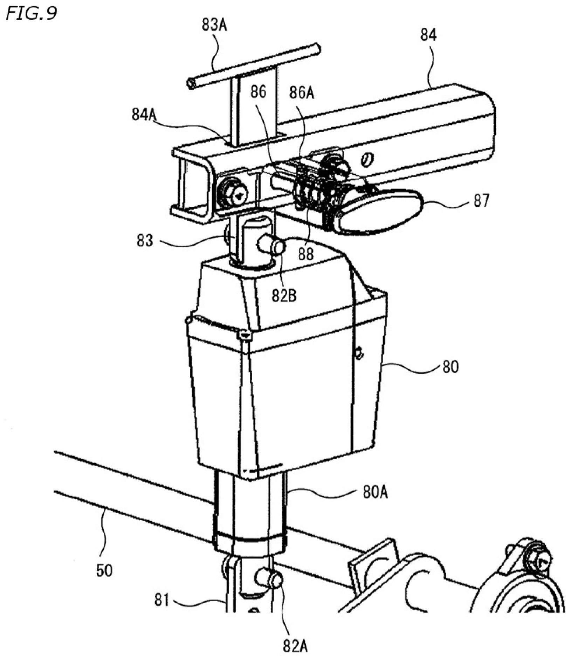

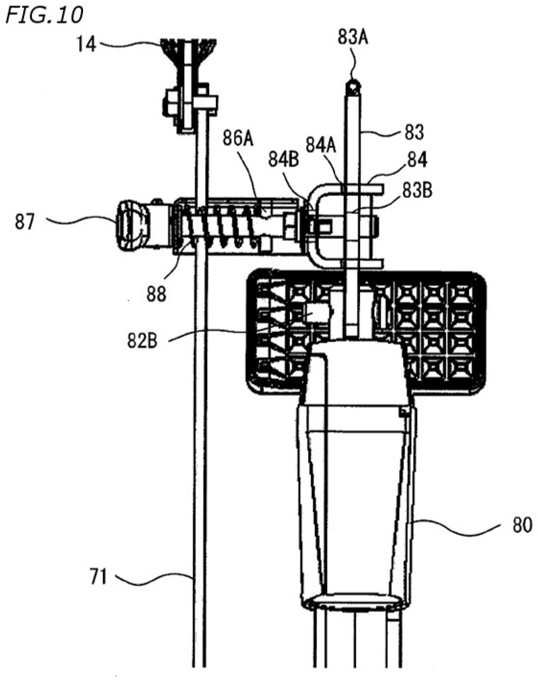

As illustrated in FIGS. 9 and 10, an upper part of the electric actuator 80 is fixed to a support frame 84 made of a channel steel extending in the front-rear direction provided in the front electric room 8A via a plate-shaped support member 83 extending in the up-down direction. A lower part of the piston rod 80A of the electric actuator 80 and an upper part of the link 81 are detachably fixed by a pin 82, and the upper part of the electric actuator 80 and the support member 83 are detachably fixed by a pin 82B. Thereby, when the electric actuator 80 fails, pins 82A and 82B can be pulled out to easily replace the electric actuator 80.

The support member 83 is provided by being inserted from a lower side to an upper side through an opening 84A having a long axis in the front-rear direction formed on a lower side and an upper side of the support frame 84, and an engaging member 83A such as a rod extending in the front-rear direction is provided at an upper end of the support member 83. A length of the engaging member 83A in the front-rear direction is formed longer than a length of the opening 84A in the front-rear direction. Thereby, when a pin 86 to be described later is pulled out, the electric actuator 80 can be prevented from excessively dropping, and can be prevented from colliding with other components.

On a left side of the support frame 84, a pin 86 extending in the left-right direction inserted into a circular opening 84B formed on a left side of the support frame 84 and a circular opening 83B formed in the support member 83, and a handle 87 fixed to a left part of the pin 86 are provided. A left part of the pin 86 is fixed so as to be movable in the left-right direction with respect to an inner peripheral part of the handle 87.

A protrusion 86A formed by a pin extending in the up-down direction is formed at an intermediate part of the pin 86, and a biasing component 88 such as a spring that pushes the pin 86 from the support frame 84 toward the support member 83 is provided between a right part of the handle 87 and a left part of the protrusion 86A. Thereby, the pin 86 inserted through the opening 83B and the opening 84B is prevented from being pulled out from the opening 83B and the opening 84B due to vibration during traveling, and the electric actuator 80 can be suspended at a predetermined position.

A clockwise rotation angle of the rotation shaft 50 when the brake pedal 11 is depressed and a clockwise rotation angle of the rotation shaft 50 when the brake lever 14 is pulled up are formed larger than a clockwise rotation angle of the rotation shaft 50 when the brake switch 15 is pressed to drive the electric actuator 80 and move the piston rod 80A upward. Thereby, when the electric actuator 80 malfunctions and the piston rod 80A cannot be moved from an upper side to a lower side and braking of the brake device 52 cannot be released, an external force acting on an engaging part between the pin 86 and the opening 83B or the opening 84B is reduced by depressing the brake pedal 11 or pulling up the brake lever 14, and the pin 86 can be pulled out from the opening 83B or the opening 84B.

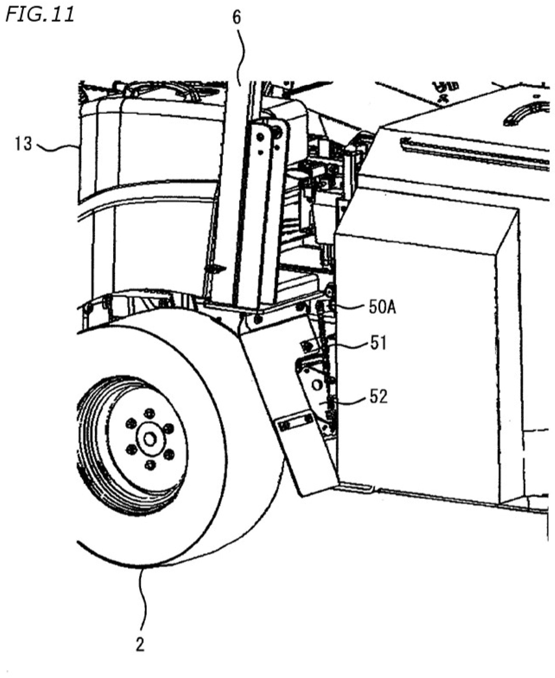

As illustrated in FIG. 11, it is preferable that the brake device 52, the rod 51, and the like can be visually recognized through a gap between the ROPS 6 and the electric room 8. Thereby, it can be easily confirmed that the electric actuator 80 has malfunctioned.

A rotation sensor that measures a rotation angle of the rotation shaft 50 is provided on one side of the rotation shaft 50, and a stroke sensor that measures up-down movement of the piston rod 80A is provided in the electric actuator 80, and when a measurement value of the rotation sensor does not change when the brake pedal 11 is depressed or depression is released, or when a measurement value of the stroke sensor does not change when the brake switch 15 is pressed or the press is released, a warning is displayed on the monitor of the steering unit 5. Thereby, the operator can be promptly notified of a malfunction of the electric actuator 80 or the like.

## Claims

1. A work vehicle comprising:
a brake device (52) that brakes a wheel (2); and
an electric actuator (80) that operates and releases operation of the brake device (52),
wherein the electric actuator (80) engages with a support frame (84), and
when engagement between the electric actuator (80) and the support frame (84) is released, the operation of the brake device (52) by the electric actuator (80) is released.

2. The work vehicle according to claim 1, further comprising a brake operation tool (11, 14) for an operator to directly manually operate the brake device (52),
wherein when the brake device (52) is operated by the brake operation tool (11, 14), the engagement between the electric actuator (80) and the support frame (84) can be released, and
when the brake device (52) is not operated by the brake operation tool (11, 14), release of the engagement between the electric actuator (80) and the support frame (84) is restricted.

3. The work vehicle according to claim 2,
wherein the electric actuator (80) includes a piston rod (80A) that moves during operation,
the electric actuator (80) engages with the support frame (84) via a support member (83) and a pin (86),
the pin (86) is inserted through the support frame (84) and the support member (83) in a direction intersecting a moving direction of the piston rod (80A), and
the engagement between the electric actuator (80) and the support frame (84) is released by pulling out the inserted pin (86) from the support member (83).

4. The work vehicle according to claim 3,
wherein the pin (86) is inserted through an opening (83B) formed in the support member (83),
the brake operation tool (11, 14) and the electric actuator (80) operate the brake device (52) via a common rotation shaft (50), and
a rotation angle of the rotation shaft (50) during operation of the brake operation tool (11, 14) is set to be larger than a rotation angle of the rotation shaft (50) during operation of the electric actuator (80).
